# EUROPÄISCHE PATENTSCHRIFT

(11) **EP 1 642 046 B1**
(45) Veröffentlichungstag und Bekanntmachung des Hinweises auf die Patenterteilung: **24.03.2010**
(21) Anmeldenummer: 04738051.4
(22) Anmeldetag: 30.06.2004
(51) Int. Cl.: F16H 33/02, F16F 15/30, H02K 7/02, H02K 49/10

(54) **VORRICHTUNG ZUR MECHANISCHEN ODER MAGNETISCHEN KRAFTÜBERTRAGUNG**
DEVICE FOR THE MECHANICAL OR MAGNETIC TRANSMISSION OF FORCE
DISPOSITIF POUR LA TRANSMISSION DE FORCE MECANIQUE OU MAGNETIQUE

(30) Priorität: 30.06.2003 CH 115703; 12.09.2003 CH 155603
(43) Veröffentlichungstag der Anmeldung: 05.04.2006
(73) Patentinhaber: Planetenergy Limited, FL-9490 Vaduz (LI)
(72) Erfinder: SCHROETTER, Johannes, c/o Planetenergy Limited, FL-9490 Vaduz (LI)
(74) Vertreter: Hasler, Erich
(86) Internationale Anmeldenummer: PCT/CH2004/000410
(87) Internationale Veröffentlichungsnummer: WO 2005/001311

(56) Entgegenhaltungen:
- EP-A- 0 683 317
- WO-A-02/41477
- GB-A- 845 654

## Beschreibung

### Gebiet der Erfindung

Die Erfindung betrifft eine Vorrichtung zur mechanischen und/oder magnetischen Kraftübertragung mit Hilfe von beweglichen und miteinander in Wechselwirkung tretenden Federn, Stossdämpfer, Magneten und dergleichen.

### Stand der Technik

Bekannt sind bereits seit langem mechanische oder magnetische Kraftübertragungsvorrichtungen, bei welchen eine Antriebskraft von einem drehbar gelagerten ersten Körper auf einen zweiten drehbar gelagerten Körper übertragen wird. Zum Einsatz kommen solche Kraftübertragungen bei starren Kupplungen oder bei sogenannten Wellen Ausgleichskupplungen. Diese sind weltweit in vielen Bauformen und Prinzipien erhältlich.

### Aufgabe der Erfindung

Aufgabe der vorliegenden Erfindung ist es, ein verbessertes Verfahren sowie eine Vorrichtung zur mechanischen oder magnetischen Kraftübertragung, insbesondere Impulsübertragung, bereitzustellen, mit welchen insbesondere das Drehmomentübertragungsvermögen verbessert werden kann. Ein weiteres Ziel ist es, ein Verfahren sowie eine Vorrichtung zur mechanischen Kraftübertragung bereitzustellen, mit welchen Impulse über weite Wegstrecken übertragbar sind. Ziel ist auch, eine Vorrichtung vorzuschlagen, mit welchen ein Teil der Impulsenergie ausgekoppelt werden kann.

### Beschreibung

Erfindungsgemäss wird die Aufgabe gelöst durch eine Vorrichtung gemäss Oberbegriff von Anspruch 1, welche dadurch gekennzeichnet ist, dass ein oder zwei Supports jeweils auf einer eigenen, unabhängigen Achse drehbar angeordnet sind. Diese erfindungsgemässe Vorrichtung hat den Vorteil, dass beliebig lange Übertragungsvorrichtungen aufgebaut werden können. Ausserdem kann eine erfindungsgemässe Vorrichtung aus identischen Einheiten oder Elementen bestehen.

Vorteilhaft sind zur Bildung eines Impulsübertragungselements jeweils zwei Supports in Abstand voneinander auf einer gemeinsamen Achse drehfest angeordnet. Es können weiterhin eine Mehrzahl solcher Impulsübertragungselemente vorgesehen sind, welche koaxial in Abstand voneinander entlang einer gemeinsamen Drehachse derart angeordnet sind, dass die Federn, Stossdämpfer oder Magnete eines Elements mindestens mit denjenigen eines benachbarten Elements zusammenwirken können. Durch die Art der Interaktion ist es möglich, Drehimpulse praktisch verlustfrei zu übertragen. Zweckmässigerweise ist die Achse des Supports oder des Elementes jeweils an einem stationären Rahmen drehbar angeordnet, und die Freilaufmittel (Backstops) mit dem Rahmen fest verbunden sind, sodass der Support oder das Element in nur einer Drehrichtung drehbar ist.

Wie bereits oben beschrieben kann ein Support als beweglicher Schlitten ausgebildet und eine Mehrzahl von Schlitten in einer Reihe und in Abstand voneinander an einer Schiene in nur einer bestimmten Richtung beweglich angeordnet sein, sodass ein von einem externen Impulsgeber auf den ersten Schlitten übertragener Startimpuls auf den letzten auf der Schiene sich befindlichen Schlitten übertragen wird. Alternativ kann als Support auch eine Scheibe oder Ring vorgesehen sein und eine Mehrzahl von Scheiben oder Ringen auf einer gemeinsamen oder mehreren Drehachsen und in Abstand voneinander als Scheiben- oder Ringaneinanderreihung angeordnet sein. Die vorbeschriebenen Geometrien sind in der Praxis leicht zu realisieren und erweisen sich als besonders günstig.

Vorteilhaft ist eine als Support dienende Scheibe, Ring, Teilring oder dergleichen durch ein zentrales oder dezentrales Freilauflager gehalten, welches dafür sorgt, dass der Support gelagert und in nur einer Drehrichtung drehbar ist. Das Freilauflager kann eine Kombination zwischen einem herkömmlichen Lager und einem Freilauflager sein. Um die Belastung des Freilauflagers gering zu halten, liegen die Ringe, Scheiben, Schlitten etc. zweckmässigerweise auf geeigneten separaten Lagern auf oder werden durch diese in wenigstens einer Richtung beweglich gehalten, und es werden separate Freilauflager eingesetzt, die z.B. in Verbindung mit einem Zahnrad, welches mit einer entsprechenden Verzahnung am Ring oder an der Scheibe zusammenwirkt, die Lauf- oder Bewegungsrichtung kontrolliert. Der Fachmann erkennt, dass im Falle der Verwendung von mehreren Lagern, diese am Innen- und/ oder Aussenumfang eines Ringes anliegen können.

Es ist denkbar, als Support für die Federn, Stossdämpfer etc. eine Kreisscheibe vorzusehen und eine Mehrzahl von diesen Scheiben in einer gemeinsamen Ebene und in Abstand voneinander in nur einer bestimmten Drehrichtung drehbar anzuordnen (Drehachse senkrecht zur gemeinsamen Ebene), sodass ein von einem externen Impulsgeber auf die erste Scheibe übertragener Startdrehimpuls bis auf die letzte Scheibe der Scheibenanordnung übertragen wird. Es besteht dabei die Möglichkeit, die Scheiben so anzuordnen, dass alle Scheiben in gleicher Drehrichtung oder jeweils alternierend in gegenläufigen Drehrichtungen drehen, wenn sich die Scheiben nicht hintereinander, sondern nebeneinander befinden. Denkbar ist auch, die Scheiben als Stapel und im Kreis anzuordnen.

Es ist denkbar, bei einer linearen Anordnung von miteinander zusammenwirkenden Supports Mittel vorzusehen, um den Impuls des letzten Supports auf den ersten Support wieder zu übertragen oder einzuspeisen. Solche Mittel können beispielsweise eine Achse sein, welche den letzten mit dem ersten verbindet. Als Lagermittel für die Supports können Lager aller Art, Kugellager, Gleitlager, Lauflager oder dergleichen eingesetzt. Von Bedeutung ist lediglich, dass ein möglichst verlustarmer Transport oder Bewegung der Supports gewährleistet ist, damit von der extern eingespeisten Energie in Form eines Impulses nicht zuviel als Reibverlust verloren geht.

Gemäss einer besonders bevorzugten Ausführungsform sind zur Bildung eines einzelnen Impulsübertragungselements jeweils zwei Supports in Abstand voneinander auf einer gemeinsamen Achse drehfest angeordnet. Dies hat den Vorteil, dass die Länger der Kraftübertragungsvorrichtung beliebig lang ausgebildet werden kann. Eine Mehrzahl solcher Elemente kann vorgesehen sein. Diese können koaxial in Abstand voneinander entlang einer gemeinsamen Drehachse derart angeordnet sein, dass die Federmittel eines Elements mindestens mit einem benachbarten Element zusammenwirken können

Zweckmässigerweise sind die Supports mittels mehreren aussen an der Peripherie anliegenden Lagern frei drehbar gelagert und an der Ringinnenseite ist eine Verzahnung vorgesehen, in welche ein durch ein Freilauflager gehaltenes Zahnrad eingreift. Die gemeinsame Drehachse der Supports kann auf einer Geraden oder einer gekrümmten Bahn, vorzugsweise einer Kreisbahn liegen.

Vorzugsweise sind auf einer oder mehreren, die Supports tragenden Achsen ein oder mehrere erste Zahnräder drehfest angeordnet, und in Abstand zur Drehachse der vorerwähnten Achsen ist mindestens eine weitere zweite Achse mit darauf angeordneten zweiten Zahnrädern mit Backstops vorgesehen, welche zweiten Zahnrädern direkt oder mit einer Kette oder Riemen in Eingriff mit den ersten Zahnrädern gebracht werden können. Mittels den zweiten Zahnrädern kann ein Teil der Impulsenergie auf einen externen Impulsenergiekollektor übertragen oder ausgekoppelt werden.

Vorteilhaft sind Mittel vorgesehen, um mindestens ein Element in einer bestimmten Drehstellung zu blockieren oder zu sperren. Diese Sperr- oder Blockiermittel können durch einen Riegel, ein Zahnrad, eine Kupplung oder dergleichen gebildet sein, und mit mindestens einem Element, vorzugsweise dem zweiten Element einer Vorrichtung, vorzugsweise formschlüssig zusammenwirken. Mittels der Sperrmittel kann beispielsweise das zweite Impulsübertragungselement einer entsprechenden Vorrichtung festgestellt werden, sodass ein erstes Antriebselement mit der gewünschten Federspannung beaufschlagt werden kann. Obwohl grundsätzlich jeder Support mit nur einer Feder bestückt sein kann, ist gemäss einer bevorzugten Ausführungsform jeder Support mit wenigstens zwei in Abstand voneinander angeordneten Federn bestückt.

Vorteilhaft sind an den Supports, Ritzeln, Zahnrädern, Backstops oder Achsen zusätzliche Masseteile, z.B. Schwungräder, zur Erhöhung der durch die Vorrichtung speicherbaren Impulsenergie angeordnet sind. Damit lässt sich die in der Vorrichtung speicherbare kinetische Energie beeinflussen. Gemäss einer bevorzugten Ausführungsform ist eine Einrichtung vorgesehen, um die maximale Kompression und/ oder Entspannung der Feder einzustellen. Dies erlaubt es, eine Restspannung zwischen den Federn benachbarter Supports aufrecht zu erhalten. Zu diesem Zweck kann die Einstelleinrichtung ein an der Feder angeordneter Rahmen oder Gewindestift mit Mutter sein, um die maximale Kompression und/oder Entspannung der Feder zu begrenzen.

Zweckmässigerweise ist die Position und Form der Magnete auf den einzelnen Supports so gewählt, dass sich eine Restspannung zwischen den auf benachbarten Supports angeordneten Magneten einstellt, die immer >0 ist. Ebenso wird im Falle von Federn oder Stossdämpfern deren Form oder Beschaffenheit sowie deren Position auf den einzelnen Supports so gewählt, dass sich eine Restspannung zwischen den auf benachbarten Supports angeordneten Federn oder Stossdämpfern einstellt, die immer >0 ist. Vorteilhaft sind die mit miteinander zusammenwirkenden Zahnräder, Ritzel oder dergleichen so angeordnet, dass die Bewegungsenergie aus den einzelnen Elementen nach aussen geführt werden kann und die Ritzel oder Zahnräder mit oder ohne Schwungräder nachlaufen können. Um dies zu bewerkstelligen können an den inneren ersten Zahnrädern zusätzliche Backstops vorgesehen sein.

Eine bevorzugte Ausführungsform sieht vor, auf einer oder mehreren Achsen ein oder mehrere erste Zahnräder mit Backstops anzuordnen, in Abstand zur Drehachse der Achsen vorerwähnten Achse mindestens eine zweite Achse mit darauf drehfest angeordneten zweiten Zahnrädern oder mit darauf angeordneten zweiten Zahnrädern mit Backstops vorzusehen, welche zweiten Zahnräder mittels iener Antriebskette, Riemen, Zahnriemen oder dergleichen oder direkt in Eingriff mit den ersten Zahnrädern gebracht werden können. Im Weiteren kann eine Steuerung vorgesehen sein, um ein unterschiedliches dynamisches Impulsverhalten zu erreichen, indem nur aus jedem zweiten, oder nur aus jedem dritten, oder nur aus jedem vierten usw. Element die Bewegungsenergie nach aussen geführt wird. Beispielsweise kann die Energie vom zweiten, vierten, sechsten, achten Element usw. oder dritten, sechsten, neunten, zwölften Element usw. nach aussen geführt werden.

Die Erfindung wird nachfolgend unter Bezugnahme auf die Figuren näher im Detail beschrieben. Dabei sind in den Figuren für gleiche Teile jeweils gleiche Bezugsziffem verwendet.

Es zeigt
- Fig.1: in perspektivischer Ansicht ein scheibenförmiger Support mit zwei einander gegenüberliegenden Halterungen für die Anbringung von je einer Feder oder eines Stossdämpfers;
- Fig. 2: der Support von Figur 1 mit an den Sockeln angeordneten Federn;
- Fig. 3: der Support von Figur 2 auf einer Achse angeordnet;
- Fig. 4: in perspektivischer Ansicht zwei auf einer gemeinsamen Achse und in Abstand voneinander drehbar angeordnete Supports (= einzelnes Impulsübertragungselement);
- Fig. 5: ein auf einer Achse drehbar angeordneter Support mit einer Antriebseinrichtung zum Antreiben resp. Anstossen des Supports (Antriebselement);
- Fig. 6: der Support von Figur 5 mit zusätzlich einer Einrichtung zum Feststellen eines rotierenden Supports in einer bestimmten Drehstellung;
- Fig. 7: eine Teilansicht einer erfindungsgemässen Vorrichtung mit einem Antriebselement (vgl. Fig. 3) und einem Impulsübertragungselement;
- Fig. 8: die Vorrichtung von Figur 7 mit einer externen Welle zum Auskoppeln von Impulsenergie;
- Fig. 9: in perspektivischer Ansicht ein weiteres Ausführungsbeispiel einer erfindungsgemässen Vorrichtung mit einer Mehrzahl von entlang einer Drehachse in Abstand voneinander angeordneten Supports;
- Fig.10: die Vorrichtung von Fig. 10 in einer zweiten Betriebsstellung der Supports;
- Fig.11: eine weitere Ausführungsform eines Supports mit zwei einander gegenüberliegend angeordneten Magneten;
- Fig. 12: ein aus zwei Supports gemäss Fig.11 bestehendes Impulsübertragungselement;
- Fig. 13: ein aus zwei Impulsübertragungselementen gemäss Fig. 12 bestehendes Getriebe;
- Fig.14: das Impulsübertragungselement von Fig. 12 mit einem Backstop und einem Zahnrad;
- Fig. 15: ein Getriebe aus zwei Impulsübertragungselementen gemäss Fig. 14 und einer in Abstand vom Getriebe angeordneten Extraktionsgetriebe;
- Fig. 16: angeordnet das Impulsübertragungselement von Fig. 14 an einem Rahmen;
- Fig. 17: ein Getriebe aus mehreren hintereinander angeordneten Impulsübertragungselementen, welche miteinander ein Eingriff sind, und einer Auskopplungsgetriebe;
- Fig. 18: das Getriebe von Fig. 17 mit einem anderen Übersetzungsverhältnis;
- Fig. 19: die Vorrichtung von Fig. 18 mit am Auskopplungsgetriebe zusätzlich angeordneten Schwungrädern;
- Fig. 20: a) eine schematische Darstellung der Magnetisierung der Magnete zweier benachbarter Elemente;
b) die Ruheposition zwischen den beiden Elementen von Fig. 20a;
c) die Lage der Magnete zweier benachbarter Elemente bei aufgebauter
Spannung ("Kompression);
- Fig. 21: eine erste Ausführungsform einer prinzipiellen Anordnung zur Energieauskopplung mit Ritzeln;
- Fig. 22: eine zweite Ausführungsform einer Anordnung zur Engergieauskopplung mit miteinander in Eingriff stehenden Zahnrädern;
- Fig. 23: eine dritte Ausführungsform einer Anordnung zur Engergieauskopplung;
- Fig. 24: eine vierte Ausführungsform einer Anordnung zur Engergieauskopplung;
- Fig. 25: eine fünfte Ausführungsform einer Anordnung zur Engergieauskopplung mit Schwungrad.

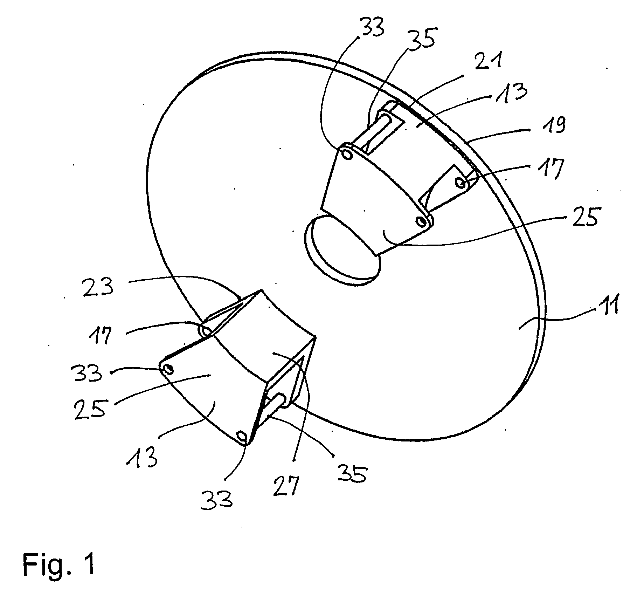

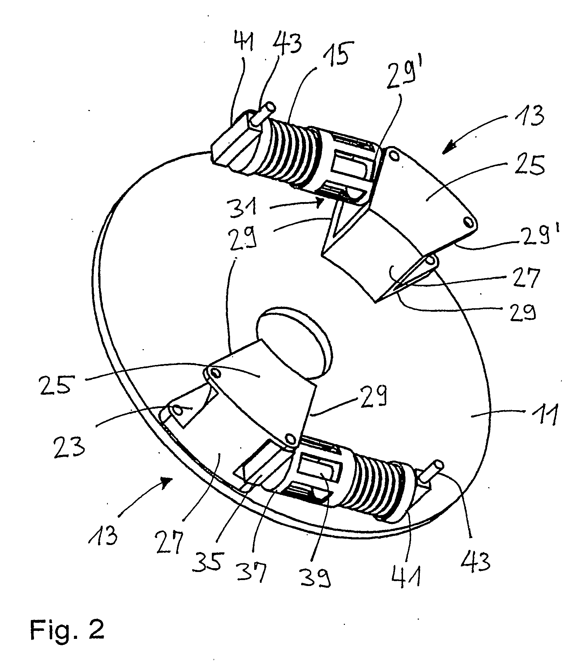

In den Figuren 1 bis 3 ist ein kreisrunder Support 11 gezeigt, auf welchem einander gegenüberliegende Halterungen 13 für Federmittel 15 vorgesehen sind (Fig.1 und 2). Die Halterungen 13 bestehen aus im Grundriss ungefähr trapezförmigen Teilen, welche mittels Schrauben oder Nieten 17 am Support 11 fest angeordnet sind. Die Halterungen 13 sind am Rand 19 des Supports 11 so angeordnet, dass die lange Basiskante 21 der trapezförmigen Halterungen 13 aussen liegt, resp. mit dem Supportrand 19 bündig sein kann.

Die trapezförmigen Halterungen 13 besitzen eine Basisfläche 23, welche auf dem Support 11 aufliegt, und eine in Abstand von der Basisfläche 23 angeordnete Stirnfläche 25. Basisfläche 23 und Stirnfläche 25 sind durch ein Mittelteil 27 fest miteinander verbunden. Das Mittelteil 27 bildet mit den Seitenkanten 29,29' der Basisfläche 23 und der Stirnfläche 25 einen zur Seite hin orientierten U-förmigen Sitz 31 für die Federmittel 15. In der Basisfläche 23 und der Stirnfläche 25 sind runde Aussparungen 33 für die Aufnahme eines Stiftes 35 vorgesehen.

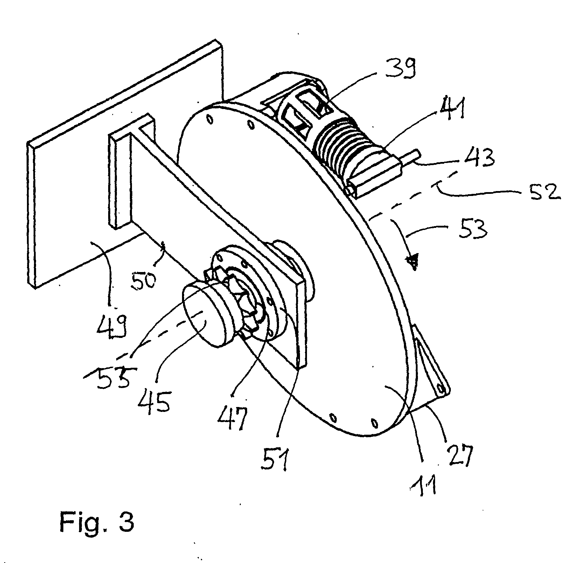

In den Figuren 2 und 3 sind die Federmittel 15 an der Halterung 13 angeordnet. Die Federmittel 15 umfassen eine Feder 15, welche auf einem Fussteil 37 angeordnet und mittels eines Bolzens oder einer Schraube 39 am Mittelteil 27 fest- oder lösbar angeordnet ist. Die Feder 15 ist zwischen dem Fussteil 37 und dem Schraubenkopf 41 eingespannt. Am Schraubenkopf 41 ist ein radial abstehender Stift 43 vorgesehen, welcher als Anschlag dienen kann.

In Figur 3 ist ein mit Federn 15 bestückter Support 11 auf einer Achse 45 fest angeordnet. Die Achse 45 ist in einem nicht näher gezeigten Lager 47 aufgenommen, welches an einem Steg 50 eines Rahmens 49 angeordnet ist. Ein am Steg 50 angeordneter und mit der Achse 45 zusammenwirkender "Backstop" (Rücklaufsperre) 51 sorgt dafür, dass die Achse 45 sich in nur einer Drehrichtung 53 (= Richtung der Impulsübertragung) drehen kann. Grundsätzlich ist denkbar, dass der Backstop 51 entweder mit dem Support 11 oder mit der Achse drehfest verbunden ist. Denkbar ist z.B. die Achse 45 drehfest angeordnet ist, und der Backstop 51 mit dem Support 11 fest verbunden ist. Von Bedeutung für die Funktion der Vorrichtung ist lediglich, dass den Backstop 51 zwischen der Achse 45 und dem Support 11 wirkt und eine Drehung des Supports 11 in nur einer Drehrichtung 53 ermöglicht. Über ein mit der Achse 45 drehfest verbundenes Ritzel 55 kann die Energie aus dem jeweiligen Impuls nach aussen führen..

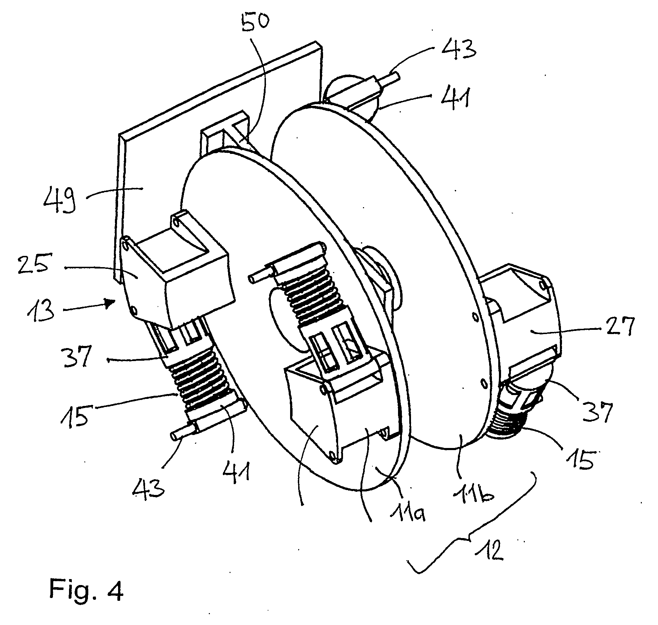

In Figur 4 ist ein aus zwei Supports 11a,11b bestehendes Impulsübertragungselement 12 dargestellt. Die Supports 11a,11b sind in Abstand voneinander auf einer in Fig. 4 nicht gezeigten Achse 45 drehfest angeordnet. Zwischen den Supports 11a,11b erstreckt sich ein rechtwinklig vom Rahmen 49 abstehender Steg 50 mit einer runden Aussparung für die Achse 45. Am Steg 50 ist mindestens ein ringförmiger Backstop 51 fest angeordnet, welcher eine Drehung der Achse 45 in lediglich einer Drehrichtung 53 erlaubt. Die Halterungen 13 und Federmittel 15 sind jeweils auf den nach aussen orientierten Seiten der Scheiben 11a,11b angeordnet.

Ein Element 12 wie in Fig. 4 bildet ein einzelnes Impulsübertragungseinheit. Eine Mehrzahl solcher Elemente 12 kann in Abstand voneinander auf einer gemeinsamen Drehachse 52 angeordnet sein, sodass ein auf ein erstes Element 12 übertragener Impuls auf ein zum ersten Element 12 benachbartes Element 12a, von diesem auf das nächste Element 12b etc. übertragen werden kann.

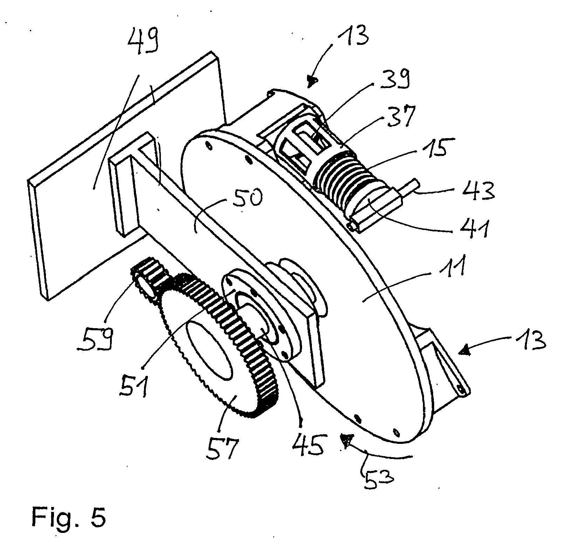

In einer Vorrichtung bestehend aus einer Vielzahl von auf einer Drehachse 52 angeordneten Elementen 12 können die am Anfang und am Ende der Vorrichtung vorgesehenen Elemente 12 gemäss Fig. 3 oder Fig. 5 lediglich einen Support 11 aufweisen. Die zwischen den endständigen Elementen vorgesehenen Elemente können sodann gemäss Fig. 4 mit je zwei Supports 11a,11b ausgebildet sein. Eine solche Vorrichtung erlaubt es, einen Impuls von einem ersten Element 12 bis zum letzten Element einer Elementreihe zu übertragen.

Das Ausführungsbeispiel von Figur 5 unterscheidet sich vom demjenigen von Figur 3 dadurch, dass anstelle des Ritzels 55 ein Zahnrad 57 auf der Achse 45 angeordnet ist. Ein mit dem Zahnrad 57 zusammenwirkendes Antriebszahnrad 59 erlaubt es, den Support 11 in Bewegung zu setzen. Auch bei diesem Ausführungsbeispiel sorgt der Backstop 51 dafür, dass die Achse 45 und der auf der Achse 45 drehfest angeordnete Support 11 in nur einer Richtung 53 drehen können.

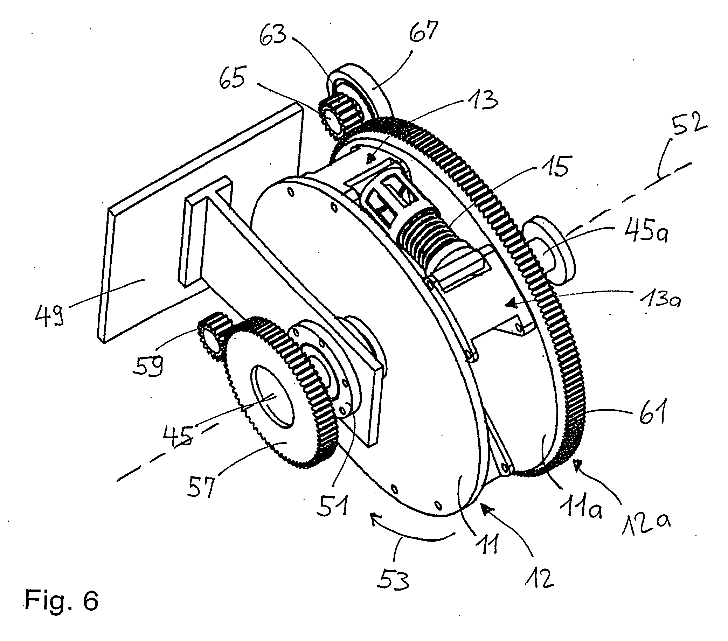

Figur 6 zeigt ein Ausführungsbeispiel, bei welchem die Antriebsseite einer erfindungsgemässen Vorrichtung gezeigt ist. Das erste Element 12 der Antriebsseite besitzt lediglich einen Support 11 mit Federn 15, welche mit einem benachbarten, auf einer zweiten Achse 45a angeordneten Element 12a zusammenwirken können. Die Elemente 12,12a sind in einem solchen Abstand voneinander angeordnet, dass die an zueinander orientierten Seiten der Elemente 12,12a angeordneten Federn 15 bei einer Relativdrehung der Elemente 12,12a auf die Halterungen 13,13a des Supports 12a treffen. Wird im Betrieb über das Antriebszahnrad 59 ein Drehimpuls auf das Element 12 übertragen, dreht sich das Element 12 in Drehrichtung 53 (Pfeil 53) und die Federn 15 treffen auf die Halterungen 13a des Elements 12a. Bedingt durch die Trägheit der Masse werden die Federn 15 zunächst zusammengedrückt, bis das Element 12 sich in Bewegung setzt. Da das erste Element 12 durch den Backstop 51 an einer Rückwärtsbewegung in Gegenrichtung zur Drehrichtung 53 gehindert ist, wird die gesamte Energie vom Element 12 auf das Element 12a übertragen. In Figur 6 ist die Vorrichtung in einem Moment dargestellt, in welchem die gezeigte Feder 15 gespannt ist.

Im Ausführungsbeispiel von Figur 6 ist am Umfang des zweiten Elements 12a eine Verzahnung 61 vorgesehen, welche in die Verzahnung 63 eines weiteren Zahnrads 65 eingreift. Das Zahnrad 65 steht mit einer elektromagnetischen oder mechanischen Bremse 67 in Verbindung. Die elektromagnetische oder mechanische Bremse 67 erlaubt es, das Element 12a so lange an einer Drehung zu hindern, bis die Drehimpulsenergie vollständig in die Federenergie transferiert ist. Wird somit mittels der Zahnräder 59 und 57 eine Federspannung zwischen 12 und 12a aufgebaut, kann diese Federspannung durch Lösen der Bremse resp. Kupplung 67 augenblicklich freigegeben werden kann. Eine solche Vorrichtung ist zweckmässigerweise zwischen dem ersten und zweiten Element 12,12a oder zwischen dem ersten und dritten oder zwischen dem ersten und vierten Element 12,12a usw. vorzusehen, um einen grossen Startimpuls erzeugen zu können. Grundsätzlich können mehrere solcher Bremsen oder Kupplungen vorgesehen sein.

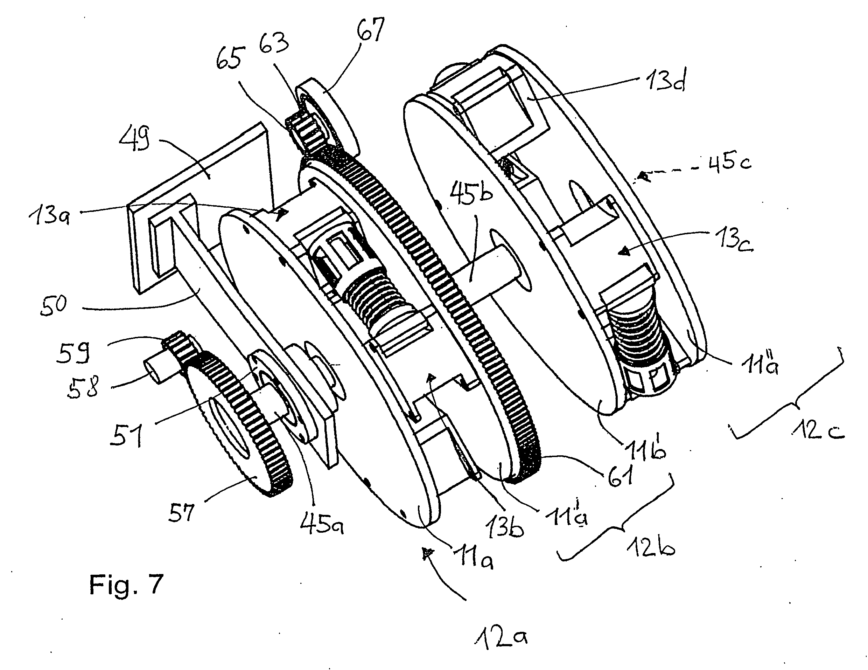

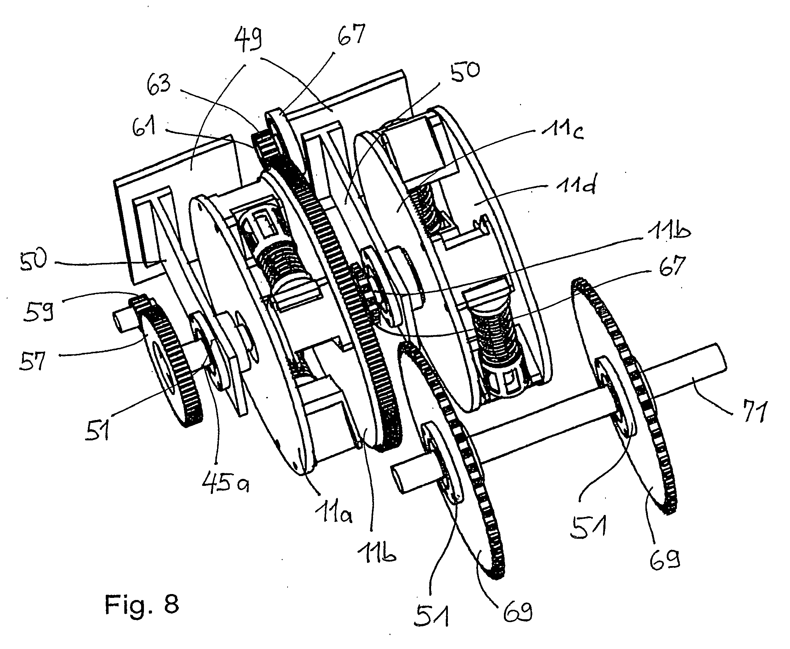

Figur 7 zeigt eine Ausführungsform, bei welcher mehrere Elemente 12a,12b, etc. miteinander zusammenwirken. Element 12a ist auf einer ersten Achse 45a, das Element 12b auf einer zweiten, von der ersten unabhängigen Achse 45b, und das Element 12c auf einer dritten unabhängigen Achse 45c (in Figur 7 nicht gezeigt) fest angeordnet. Aus Gründen der Übersichtlichkeit sind bestimmte Teile, wie der Backstop 51 und der Rahmen 49 mit Steg 50 zur Befestigung der Welle 45b, in der Zeichnung weggelassen worden (vgl. dazu Figur 8). Wird über das mittels einer Antriebswelle 58 antreibbare Antriebszahnrad 59 und das Zahnrad 57 ein Impuls auf die Achse 45a und damit das Element 12a übertragen, so wird dieser Impuls von den Federn 15a praktisch vollständig auf das Element 12b und von diesem auf das Element 12c übertragen (nur der Support 11a" des Elements 12c dargestellt). Auf diese Weise wandert ein einmal auf die Vorrichtung übertragener Impuls konsekutiv von einem Element zum nächsten Element weiter, so lange, bis er am Ende der aus einer Mehr- oder Vielzahl von hintereinander angeordneten Elementen 12a,12b, etc. angelangt ist. Grundsätzlich ist denkbar, dass der Impuls dann wieder umkehrt und an den Ort, wo der Impuls auf die Vorrichtung gegeben wurde, zurückwandert. Zu diesem Zweck können an den Halterungen 13a,13b, etc. benachbarter Elemente 12a,12b, etc. jeweils Federmittel 15a, 15b, etc. vorgesehen sein. Eine solche Vorrichtung kann grundsätzlich dazu verwendet werden, kinetische Energie für eine bestimmte Zeit zu speichern.

Figur 8 zeigt eine mechanische Impulsübertragungsvorrichtung mit 3 hintereinander angeordneten Elementen 12a bis 12c. Das Element 12b hat zwischen den Supports 11b und 11b' auf der Achse 45b ein Zahnrad 67 drehfest angeordnet. Das Zahnrad 67 kann mit einem Zahnrad 69 zusammenwirken. Das Zahnrad 69 ist auf einer Welle 71, welche parallel zur Drehachse 52 verläuft, mit einem Backstop 51 angeordnet.. Mittels den Zahnrädern 69 kann Energie von der Impulsübertragungsvorrichtung auf die Welle 71 übertragen werden. Zu diesem Zweck können die Ritzel 67 und 69 mit einer Kette, Zahnriemen etc. oder direkt in Form von zwei miteinander in Eingriff stehenden Zahnrädern beweglich miteinander verbunden sein. Wenn der Support 11a rotiert, wird auch der Support 11b und damit die Achse 45b in Rotation versetzt. Via Ritzel 67,69 kann Energie auf die Welle 71 übertragen werden. Grundsätzlich können zwecks Energieauskopplung die Backstops am Ritzel 69 oder am Ritzel 67 vorgesehen sein. Die Welle 71 mit dem Zahnrad 69 kann Teil einer Impulsenergiekollektors sein.

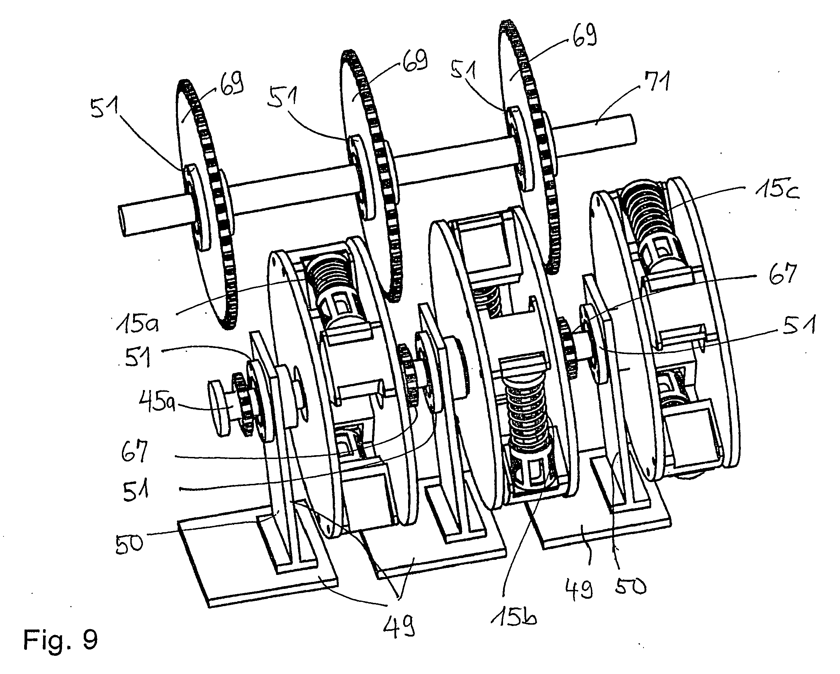

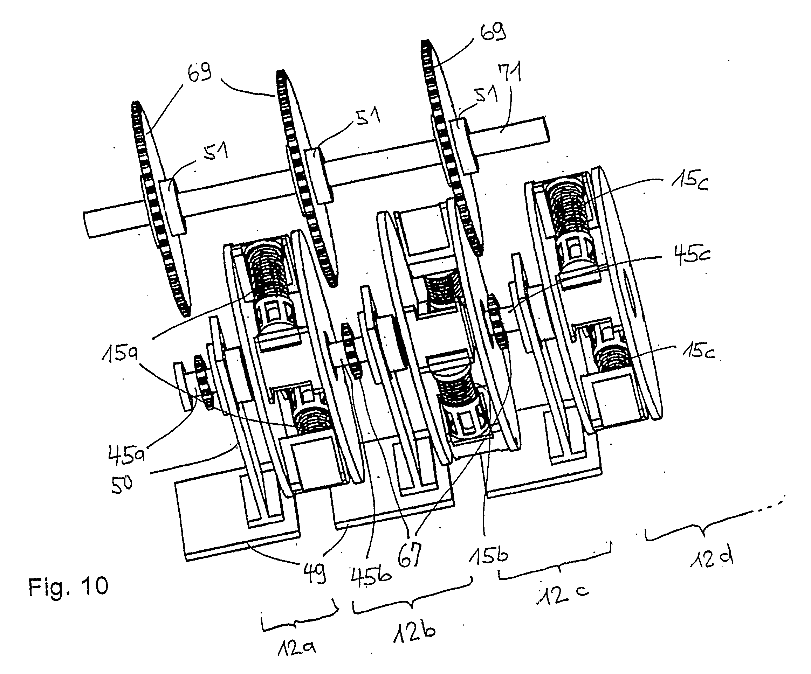

Die Figuren 9 und 10 zeigen eine Impulsübertragungsvorrichtung mit 4 hintereinander angeordneten Elementen 12 in verschiedenen Betriebsstellungen. In Figur 9 ist zu einem bestimmten Zeitpunkt t die Feder 15a gespannt, und die Federn 15b und 15c entspannt. In einem nachfolgenden Zeitpunkt t +x ist der Impuls vom Element 12a auf die Elemente 12b und 12c übertragen und die Federn 15b gespannt.

Vorzugsweise sind Federelemente zu wählen, die es erlauben, eine Restspannungseinsstellung zu fixieren. Dies kann erreicht werden durch eine mechanische Vorrichtung, wie sie in einem Stossdämpfer zum Einsatz kommt. Die Federn können auch vorzugsweise so konstruiert sein, dass sich bei kompletter Entspannung das Angriffsmoment (kurz vor dem Entspannungspunkt) noch relativ nah zum maximalen Spannungspunkt befindet. Vorzugsweise gelangt ein solches Federelement zum Einsatz, bei welchem die Restspannung eingestellt werden kann.

Der Energieentzug ist vorzugsweise so zu wählen, dass dieser das Drehmoment der durch eine z.B. 1000 Kg vorhandene Feder-Restspannung der einzelnen Feder nicht mehr als 80% (800 Kg) erreicht. Damit wird erreicht, dass sich der Impuls relativ schnell und gleichmässig durch das System (= Anordnung von einer Mehrzahl von Elementen) setzt. Bei der Verwendung von Magneten ist darauf zu achten, dass jeweils eine Magnetrestspannung (MRS) erhalten bleibt.

Die Fliehkraft der einzelnen Elemente bzw. der einzelnen Supports kann auch mechanisch erhöht werden, indem man an der Achse des jeweiligen Elements ein grosses Ritzel und aussen im "Impulsenergiekollektor" ein ebenso kleines Ritzel wählt, es jedoch mit einem grossen Schwungrad kombiniert. Damit wird mechanisch das Gewicht der Elemente nach oben gebracht. Schwungrand und Backstop können beispielsweise als eine einzige Einheit ausgebildet sein. Es ist weiter denkbar, dass das innere Ritzel mit einem Backstop ausgestattet ist. Ausserdem kann - wie in Figur 8 gezeigt, sowohl am äusseren und inneren Zahnrad 69 resp. 67 Backstops vorgesehen sein.

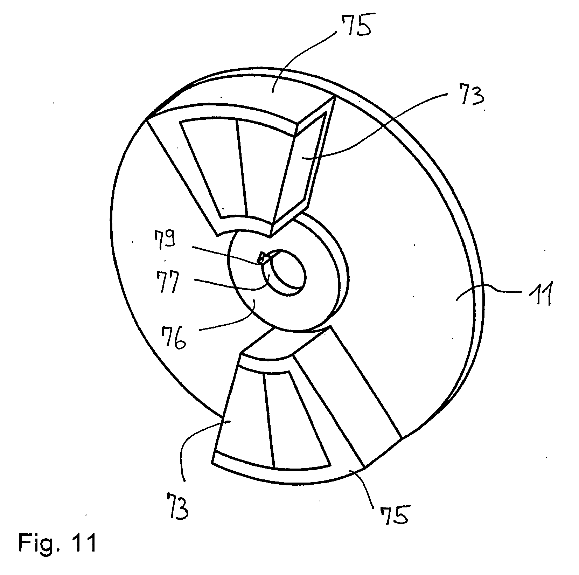

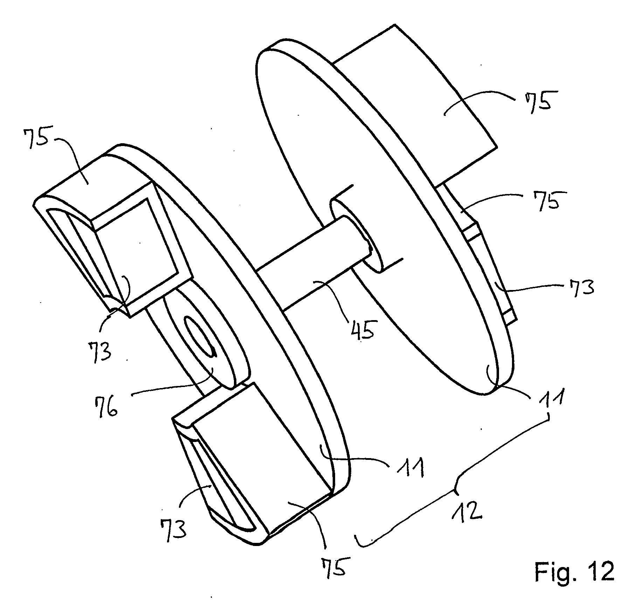

Fig.11 und 12 zeigen eine weitere Ausführungsform eines Supports 11 mit zwei an einer Seite des Supports angeordneten Magneten 73. Die Magnete 73 sind mittels eines Gehäuses 75 mit dem Support 11 fest verbunden. Im Zentrum des kreisrunden Supports 11 befindet sich ein Flansch 76 mit Rundloch 77 zur Aufnahme einer Achse 45. Eine Nut 79 dient der Aufnahme eines Stiftes oder Splints, mit welchem der Support 11 auf einer Achse 45 drehfest angeordnet werden kann. Die Magnete 73 sind so dabei orientiert, dass der magnetische Feldvektor in Bewegungsrichtung orientiert ist und keine Axialkräfte auftreten. Die in Fig. 12 gezeigte Einheit bildet ein sogenanntes Impulsübertragungselement 12.

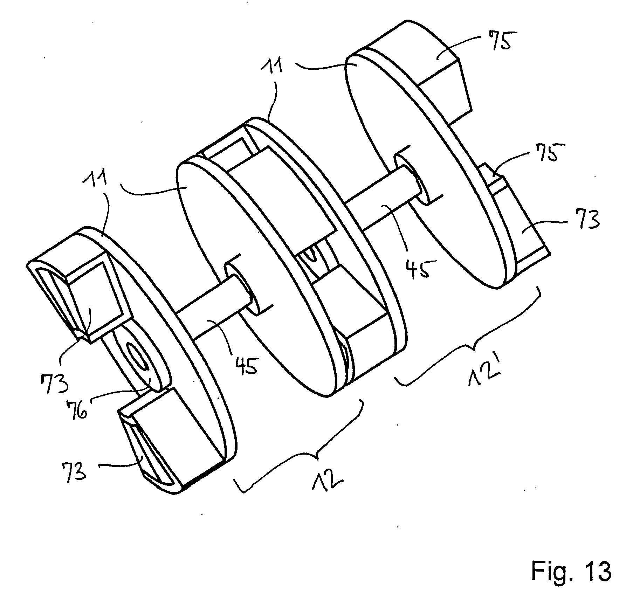

In Fig. 13 sind zwei hintereinander angeordnete und miteinander ein Getriebe bildende Impulsübertragungselemente 12,12' gezeigt. Die Pole der miteinander zusammenwirkenden Magnete 73 sind gegeneinander orientiert, sodass bei einer Annäherung der Magnete eine Abstossungskraft zwischen den Magneten aufgebaut wird. Folglich werden die Magnete den Impuls an ein benachbartes Element 12 weitergeben, ohne dass sie sich berühren.

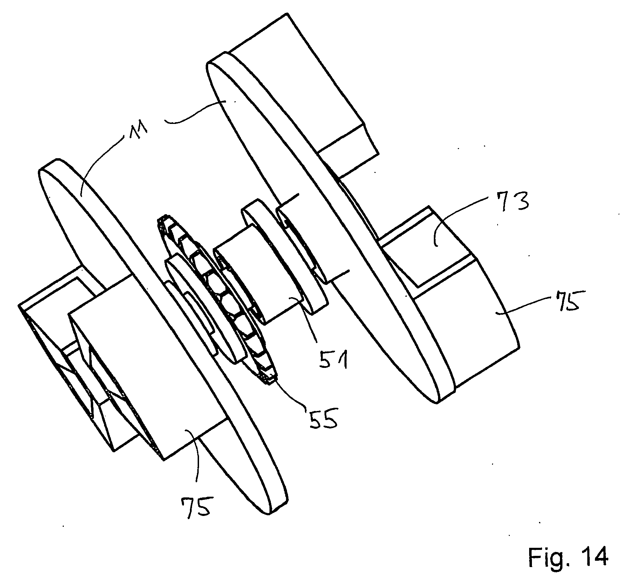

Fig. 14 zeigt schematisch ein Impulsübertragungselement 12 mit einem auf der Achse 45 angeordneten Backstop 51 und einem Ritzel 55.

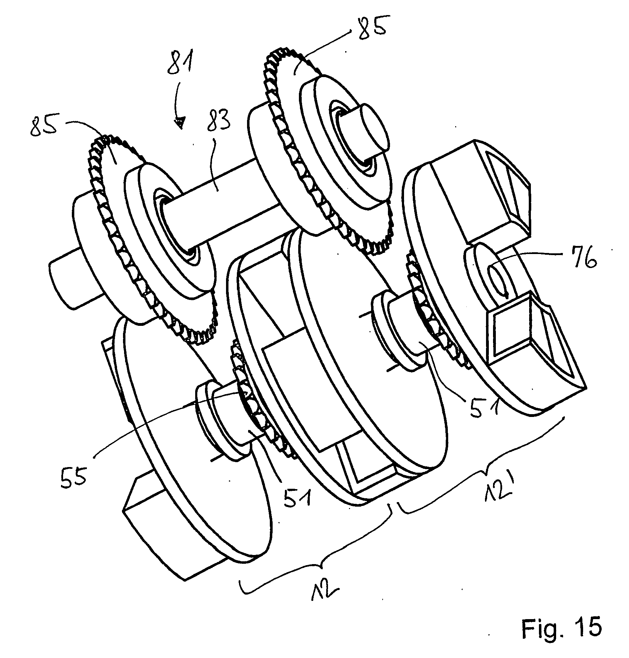

Fig. 15 zeigt ein Getriebe aus zwei Elementen 12,12' und einem Energiekollektor 81. Der Energiekollektor 81 hat eine Achse 83, auf welcher Ritzel 85 mit einem Backstop angeordnet sind. Der Abstand der Ritzel 85 ist gleich gross wie der Abstand der Ritzel 55. Ritzel 5 und 85 können mittels Kette, Riemen oder dergleichen oder in From von Zahnrädern direkt in Eingriff kommen und damit den Energiekollektor 81 antreiben.

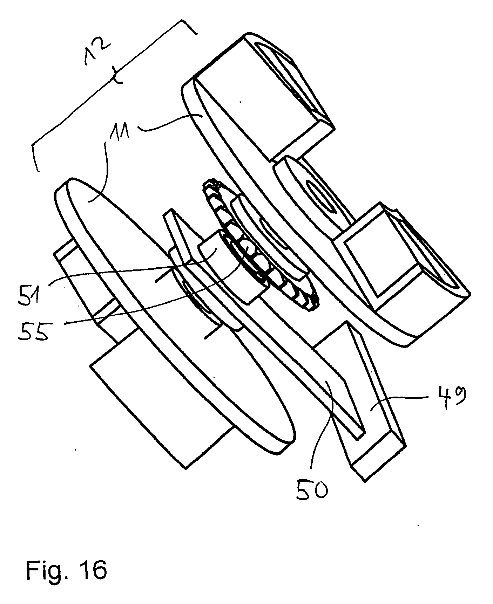

In Fig. 16 ist ein Element 12 am Steg 50 des Rahmens 49 angeordnet.

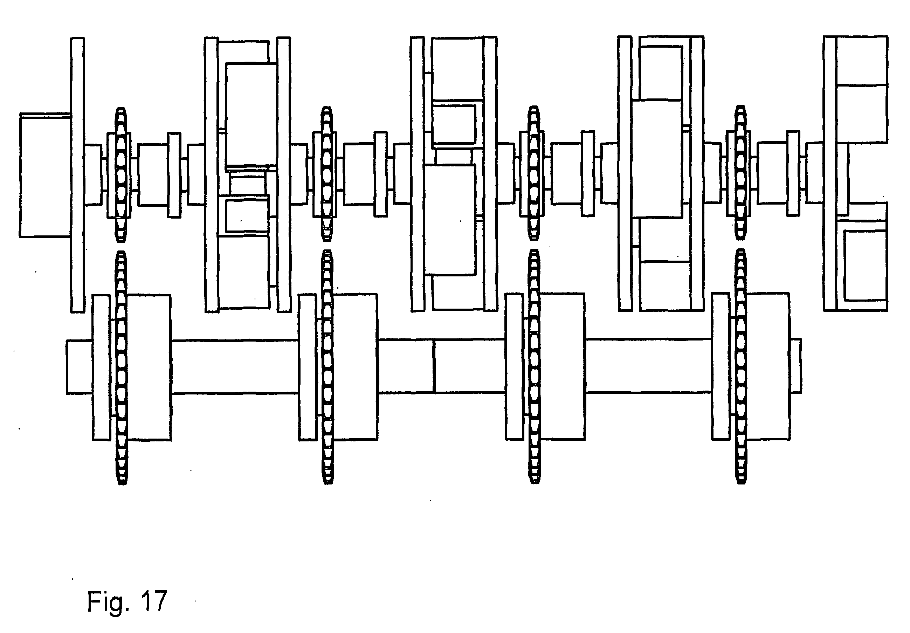

Die Figuren 17 bis 19 zeigen Getrieben aus mehreren Elementen 12 mit parallel zum Getriebe angeordnetem Energiekollektor 81.

Ein kleines Zahnrad, Ritzel am Element kombiniert mit einem grossen Zahnrad am Energiekollektor bewirkt eine Drehmomentsteigerung an der Impulsenergiekollektorachse (Fig. 17).

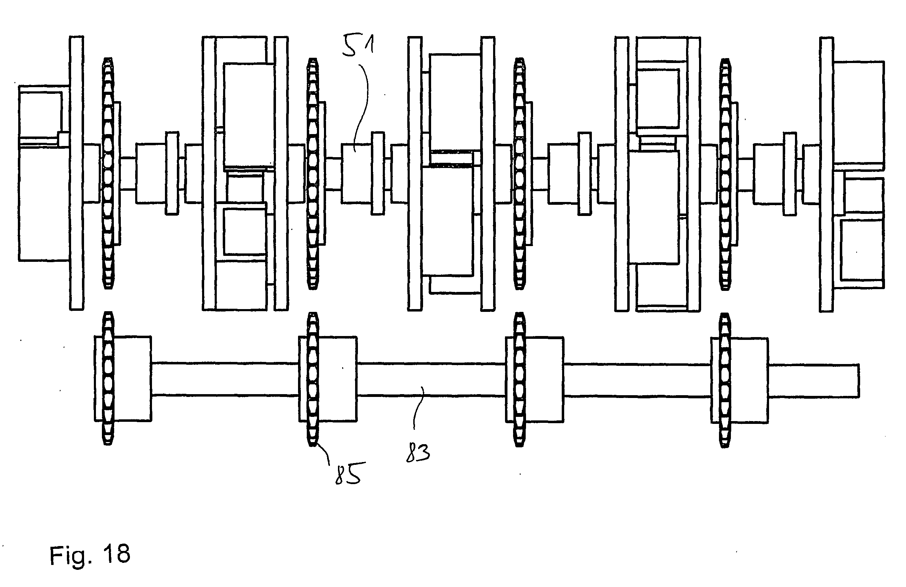

Ein grosses Zahnrad, Ritzel am Element kombiniert mit einem kleinen Zahnrad am Energiekollektor bewirkt eine Geschwindigkeitssteigerung an der Impulsenergiekollektorachse (Fig.18).

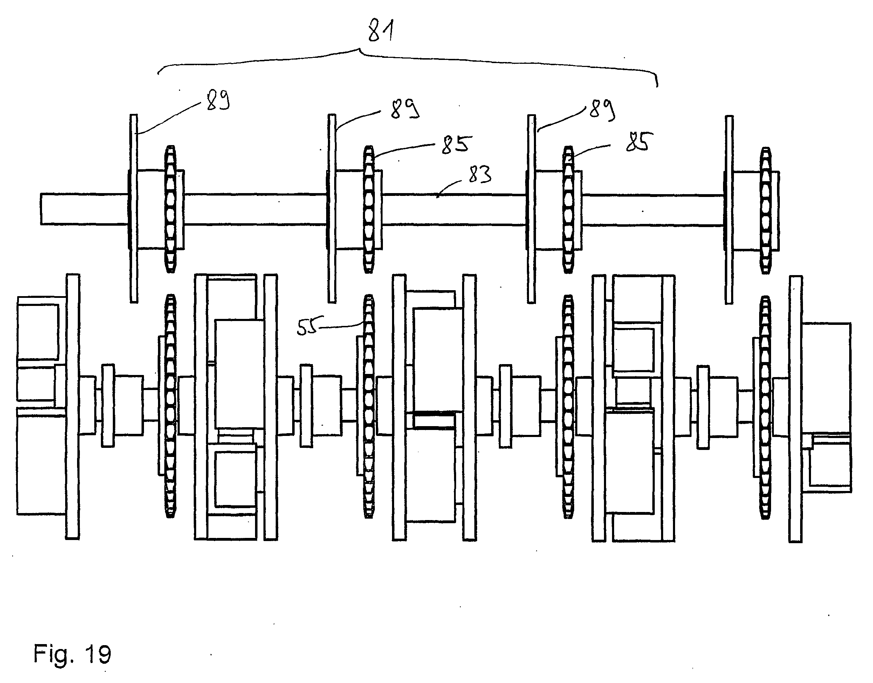

Vorzugsweise sind zwei im Verhältnis zum Durchmesser eines Supports mittelgrosse Zahnräder zu verwenden, eines am Element und eines jeweils am Impulskollektor. Durch die zusätzliche Kombination des Ritzels/Zahnrades mit Backstop am "Impulsenergiekollektor" mit einem Schwungrad 89 kann das Optimum einer Energieausbeute erfolgen (Fig. 19).

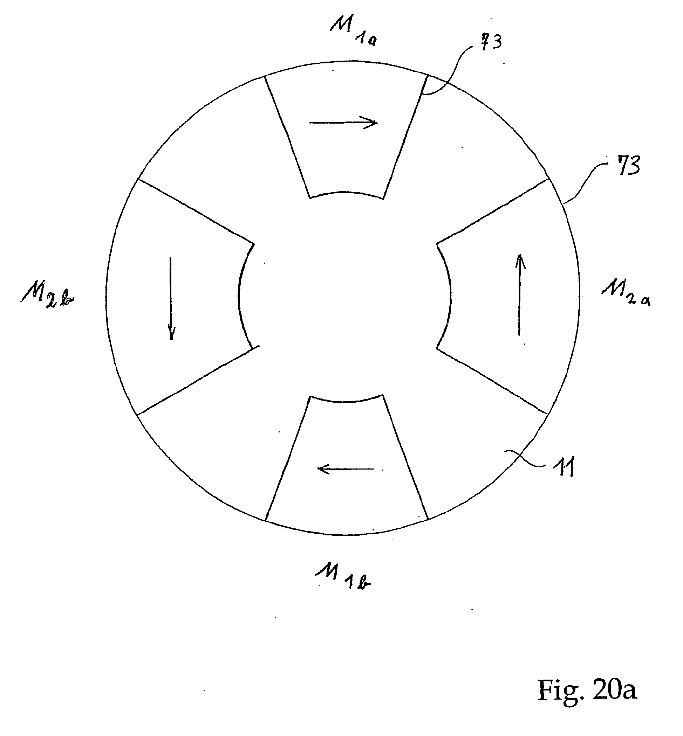

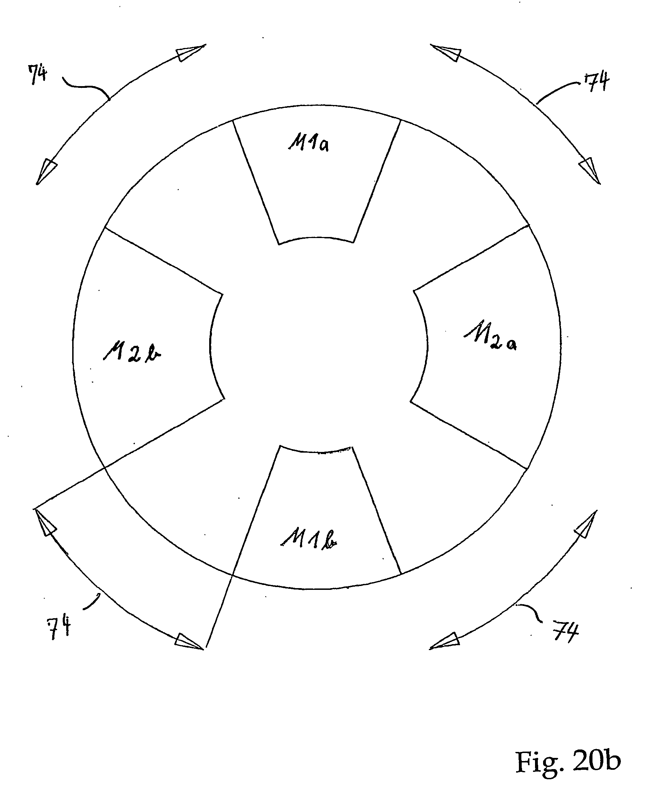

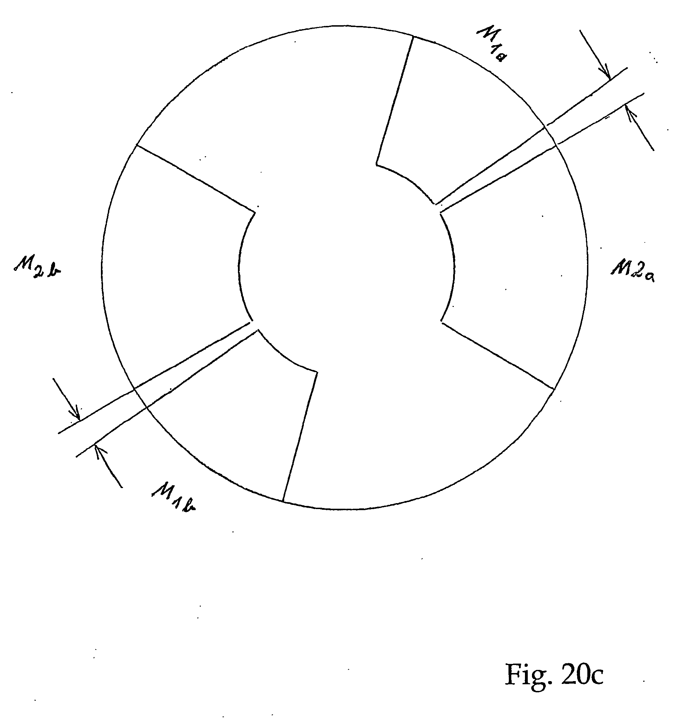

Anhand der Figur 20 soll die Energieübertragung nachfolgend beispielhaft erläutert werden (M1b + M1a sind 1. Element; M2b + M2a sind 2. Element): In der Ruhestellung herrscht zwischen den Magneten M1a + M2a beispielsweise eine Restspannung (Pfeil 74) von 500 Nm, d.h. alle Magnete befinden sich in der Balancestellung. Dabei ist von Bedeutung, dass die Restspannung > 0 Nm ist. Dadurch wird erreicht, dass bei der Impulsübertragung das Drehmoment nie unter der jeweiligen Restspannung liegt. Dies gilt gleichermassen für Ausführungsbeispiele mit Magneten oder mit Federn. Der Abstand (gap) zwischen den Magneten M1b und M2b, resp. M1a und M1b (Pfeile 78) entspricht der aufgebauten Spannung gekennzeichnet.

### Zur Energieauskopplung

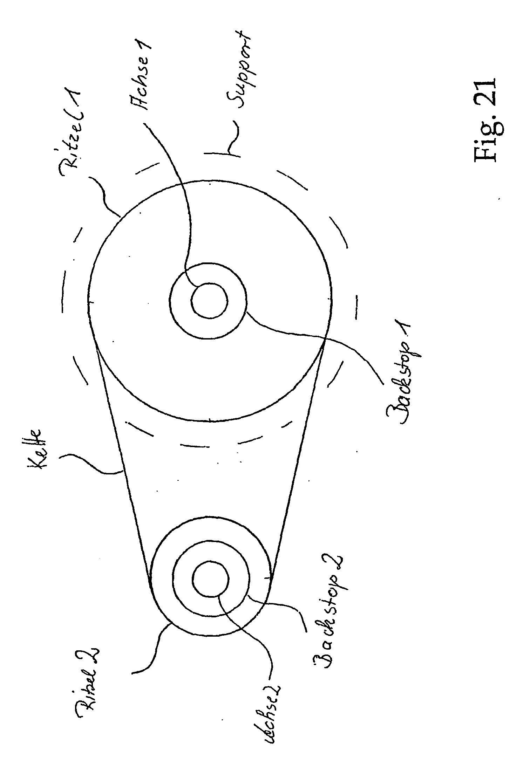

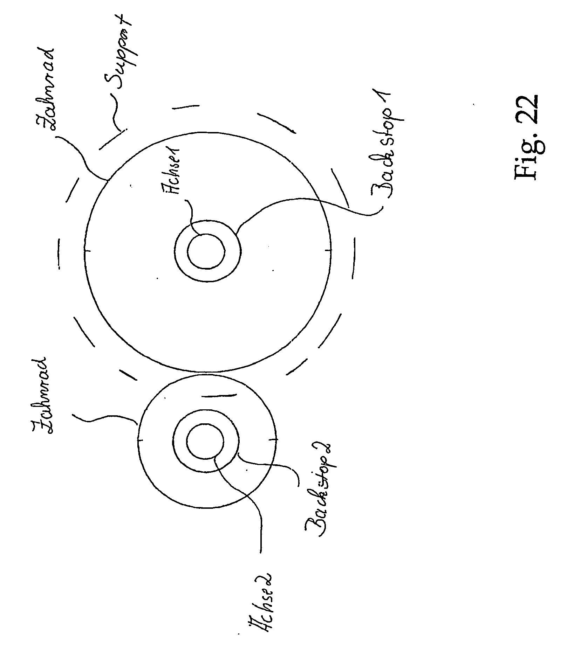

Figur 21 zeigt schematisch eine prinzipielle Anordnung, bei welcher einRitzel 1 drehfest an Achse 1 oder Support/Scheibe angeordnet ist. Backstop 1 erlaubt die Drehung der Achse 1 nur in Impulsrichtung. Das Ritzel 2 ist mit dem Backstop 2 fest verbunden. Der Backstop 2 erlaubt, den jeweiligen Impuls, der aus Ritzel 1 über Ritzel 2 gewonnen wird, auf die Achse2 zu übertragen. Ist der Impuls voll übertragen und das Ritzel 2 kommt zum Stillstand, dann können die in Reihe auf Achse 2 angeordneten Ritzel 2b mit Backstop 2 b und Ritzel 2c und Backstop 2c etc. den durch die Anordnung laufenden Impuls auf die Achse 2 übertragen, ohne dass die anderen Ritzel, die sich im Stillstand befinden, mitgerissen werden, da der jeweilige Backstop 2 ein Durchschleifen ermöglicht. Die Ritzel können mit einer Kette oder Riemen miteinander in Verbindung sein. Anstelle der Ritzel können aber auch Zahnräder oder dergleichen zum Einsatz kommen, wie dies in Figur 22 gezeigt ist. Bei beiden Beispielen (Figuren 21 und 22) kann die Energie des Gesamtimpulses an der Achse 2 abgenommen werden, wobei die Achse 2 auch unterteilt sein kann (mehrere einzelne Generatoren bei einer langen Impulskette). Grundsätzlich kann die Achse auch mittels Kupplungen unterteilt sein.

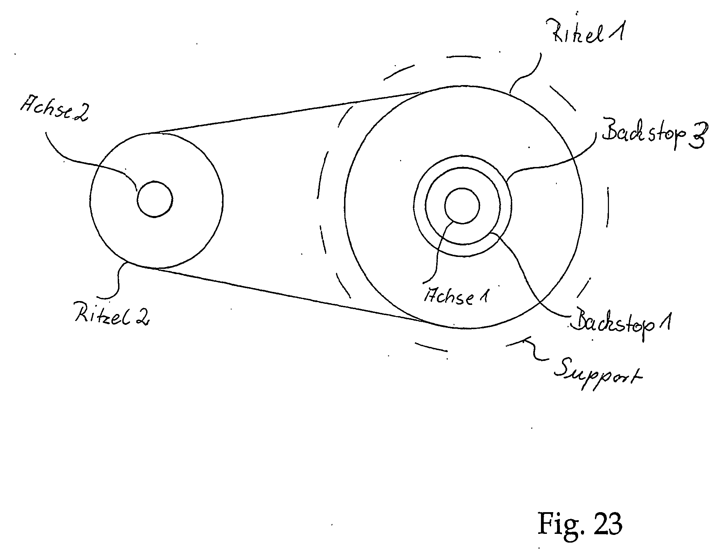

Im Ausführungsbeispiel gemäss Figur 23 ist das Ritzel 1 am Backstop 3 befestigt, und das Ritzel 2 drehfest an der Achse 2 angeordnet. In diesem Ausführungsbeispiel erfüllt der Backstop 3 die Aufgabe des Backstops im ersten Ausführungsbeispiels.

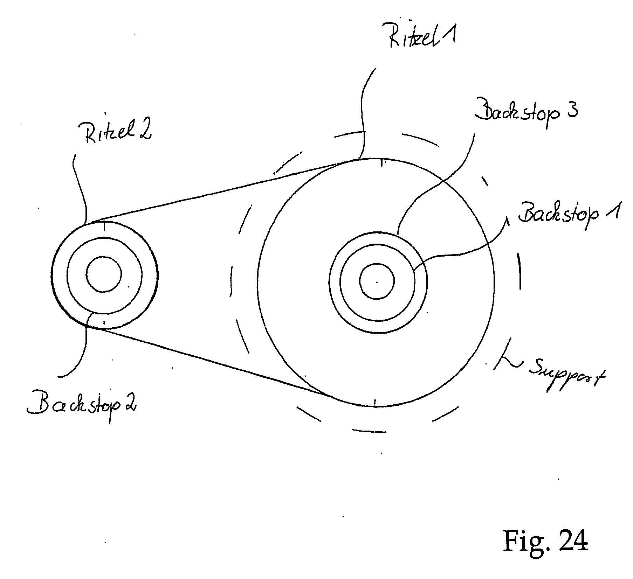

Das Ausführungsbeispiel gemäss Figur 24 entspricht einer Kombination der Ausführungsbeispiele 1 und 3.

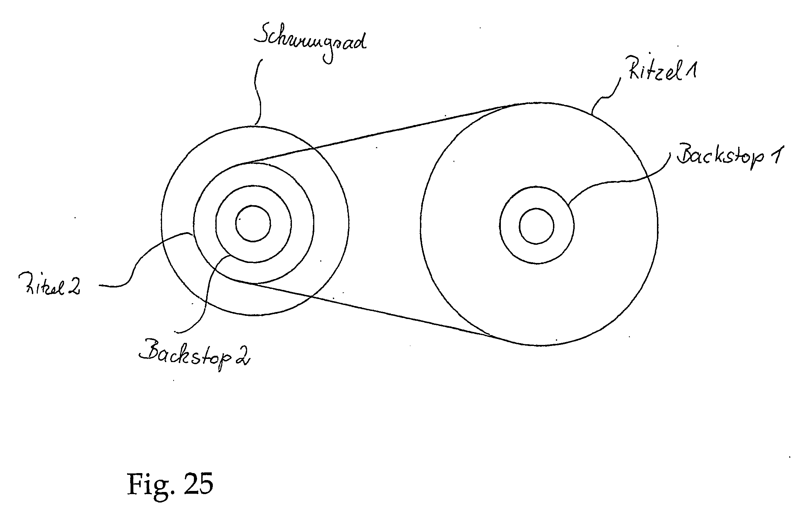

Das fünfte Ausführungsbeispiel (Fig. 25) zeigt eine Anordnung mit Schwungrad. Durch die Kombination mit einem Schwungrad wird erreicht, dass eine noch perfektere Impulsübertragung erfolgt. Auch eine Erhöhung der Fliehkraft wird erreicht. Weiter hat die Verwendung von Schwungrädern den Vorteil, dass das gewünschte Eigengewicht der inneren Scheiben herabgesetzt werden kann (Gewichtsersparnis), wenn die Schwungräder aussen an den Ritzeln oder Backstops angebracht werden.

Wesentlich bei der erfindungsgemässen Vorrichtung ist, dass ein Impuls oder Drehmoment mittels Federn, Stossdämpfern, Magneten oder dergleichen von einem Support in einer bestimmten Richtung beweglich gelagerten 2. Support auf den benachbarten in derselben Richtung beweglich gelagerten 3. Support und so weiter übertragen wird. Von Bedeutung ist nun, dass jeder Support mit geeigneten Mitteln, z.B. Freilaufmitteln wie Freilauflager in Verbindung steht, sodass dieser in nur einer bestimmten Richtung drehen oder sich vorwärts bewegen kann. Durch den durch die eingesetzten Freilaufmittel verunmöglichten Rücklauf eines in Bewegung gesetzten Supports wird eine praktisch vollständige Impulsübertragung auf den jeweils nächsten Support bewirkt, sodass ein von einem externen Impulsgeber einmal auf die magnetische Kraftübertragungsvorrichtung übertragener Startimpuls ähnlich einer Welle praktisch verlustfrei über grosse Strecken übertragbar ist. Durch den Einsatz von Für den fachkundigen Leser ist klar, dass im Rahmen dieser Erfindung unterschiedlichste Anordnungen und Ausrührungen denk- und realisierbar sind, ohne vom Erfindungsgrundgedanken abzuweichen.

Eine perfekte, selbst kompensierende Symmetrie ist,
wenn sich jedes Element einer Anordnung automatisch (d.h. eins nach dem anderen) in eine neue Position einstellt, nachdem ein oder mehrere Elemente einer Anordnung in seiner/ihrer Grundeinstellung verändert wird/werden. Es ist von Vorteil, wenn die Bewegungsrichtung aller Elemente in ein und derselben Drehrichtung begrenzt ist. Dabei spielt die Anzahl der Elemente solange keine Rolle als, dass
a) die innere Spannung im Gleichgewicht der einzelnen Elemente zueinander höher ist als die gesamte Reibung im mechanischen System.
b) mindestens ein, bevorzugt alle Elemente (auf die Kräfte einwirken) in einer und derselben Drehrichtung begrenzt sind.

1. Hauptsatz einer dynamischen, selbst kompensierenden mechanischen und/ oder magnetischen Symmetrie:
   Eine asymmetrische in Unruhe befindliche, dynamische, selbst kompensierende Symmetrie (einer Anordnung von Elementen) stellt sich selbst wieder symmetrisch durch ihre inneren Kräfte/Drehmoment-Spannungen der einzelnen Elemente her, solange die aufeinander einwirkenden Kraft/Drehmomentspannung zwischen jedem ineinander wirkendem Element höher ist als die Summe der Reibung im gesamten System, oder einfacher:
   Eine asymmetrische, in Unruhe befindliche, dynamische, selbst kompensierende Symmetrie stellt sich aus ihrer eigenen inneren Kraft wieder her, solange die im Gleichgewicht einander wirkende Drehmoment- Spannung zwischen den einzelnen Elementen grösser ist als die Summe der Reibung im gesamten System.
2. Hauptsatz einer dynamischen, selbst kompensierenden mechanischen und/oder magnetischen Symmetrie:

Die Menge an Energie, die erzeugt wird (abgenommen werden kann an einer oder mehreren Kollektorachsen) nach einer oder mehreren ganzen (alle Elemente) "Wiederherstellungen" (ein pulsierendes Element oder pulsierende Elemente verursachen asymmetrishe -> symmetrische Reaktion) kann höher sein (bei entsprechender Anzahl an Elementen), als die anfängliche Energie (Veränderung der Position eines oder mehrerer Elemente durch Impulse), die eine Asymmetrie verursacht oder einfacher:

Die Energiemenge, die bei einer symmetrischen Wiederherstellung einer dynamischen, selbst-kompensierenden mechanischen und/oder magnetischen Symmetrie frei wird, kann bei Erhöhung der Anzahl von Elementen grösser sein als die Energiemenge, die eine impulsartige Symmetrie im System verursacht oder hervorruft.

Zahnräder an den Elementen (vgl. Figur 14) bringen jeden asymmetrischen Schritt (getriebener Impuls) ausserhalb der Anordnung, wobei Zahnrad-Rücklaufsperren-Einheiten (Bezugsziffer. 85 in Figur 15) die Kraft (Energie) individuell, aber fliessend (overrun-clutch Effekt) an eine Achse, die mit einem Generator angekoppelt ist, weiterzuleiten. Diese eingeleitete "Unruhe" (Impuls am ersten Element) wird während des Betriebs des Systems permanent in Sequenzen (wiederholt) gepulst (um einen Gleichlauf zu erreichen, ist die 2., 3. Sequenz unmittelbar bevor der 1., 2. Impuls das andere Ende der Anordnung erreicht, eingeleitet) zeitversetzte, aber fliessend gespeicherte zusätzliche Bewegung ist umgesetzt in "Energie".

### Rechenbeispiel mit 50 Elementen:

| |
|---|
| Energie-Eingabe am 1. Element (eingeleiteter Impuls, 60 Grad) |
| ↓ |
| Energie-Ausgabe am 2. bis 50. Element 49 x 60 Grad (getriebener Impuls 2940 Grad) |
| ↓ |
| Kompensation der Symmetrie bewirkt "Energie - Produktion" |

### Erklärung:

Das Drehmoment des Impulses bewegt sich in unserem Beispiel zwischen 1000 Nm (= max. Spannung) und 500 Nm (= Restspannung) => 750 Nm.

Der Skeptiker wird vorbringen: Da Reibung im Spiel ist, wird diese symmetrische Anordnung irgendwo in der Mitte anhalten.

Dies ist unrichtig, da z.B. 50 Elemente hintereinander eine Gesamtverteilung inklusive der Kolletivachse von 50 Nm Drehmomentverlust aufweisen (500 Nm- 50 Nm = 450 Nm, 1000 Nm - 50 Nm = 950 Nm).
→ min 450 Nm, max 950 Nm
→ Durchschnitt 700 Nm stehen permanent zur Verfügung, da der Impuls permanent wiederholt wird.

Um eine rasche Folge von Impulsen zu erhalten, wird in der Praxis 50% vom Durchschnittsdrehmoment (im Beispiel: 350 Nm) an einen Generator abgeführt.

### Bezugsziffern

- 11: Support
- 13: Halterungen
- 15: Federmittel
- 17: Schrauben oder Nieten Schrauben oder Nieten
- 19: Rand des Supports (Peripherie)
- 21: Basiskante der trapezförmigen Halterungen
- 23: Basisfläche
- 25: Stirnfläche
- 27: Mittelteil
- 29,29': Seitenkanten
- 31: U-förmigen Sitz
- 33: Aussparungen
- 35: Stift
- 37: Fussteil
- 39: Bolzen oder Schraube zum Befestigen der Feder 15
- 41: Schraubenkopf
- 43: Stift
- 45: Achse
- 47: Lager
- 49: Rahmen
- 50: Steg des Rahmens mit einer Aufnahme für die Achse 45
- 51: "Backstop" (Rücklaufsperre)
- 52: Drehachse der Achse 45
- 53: Drehrichtung
- 55: Ritzel
- 57: Zahnrad
- 59: Antriebszahnrad
- 61: Verzahnung am Umfang des Supports
- 63: Verzahnung der elektromagnetischen oder mechanischen Bremse
- 65: Zahnrad der elektromagnetischen oder mechanischen Bremse
- 67: Zahnrad zwischen den Supports
- 69: Zahnrad auf der Achse 71
- 71: Achse des Impulsenergiekollektors
- 73: Magnete
- 74: Pfeil für Restspannung
- 75: Gehäuse
- 76: Flansch
- 77: Rundloch
- 79: Nut
- 81: Energiekollektor
- 83: Achse
- 85: Ritzel
- 89: Schwungrad

## Patentansprüche

1. Vorrichtung zur Kraftübertragung mittels mechanischer Wechselwirkung mit
- einer Mehrzahl von Supports (11) zur Aufnahme oder Anordnung von einer oder mehrerer Federn, Stossdämpfern oder Magneten,
- mindestens einer Achse, auf welcher die Supports mittels Lagermitteln drehbar angeordnet sind,
- einem oder mehreren Freilaufmitteln (47), insbesondere Freilauflager, welche zwischen den einzelnen Supports (11) und der mindestens einen Achse wirken, sodass die die Feder, Stossdämpfer oder Magnete (15) tragenden Supports (11) in nur einer Bewegungsrichtung (53) um eine Drehachse (45) drehbar sind,
- auf den Supports (11) angeordneten Federn, Stossdämpfer oder Magnete (15), welche jeweils in Bewegungsrichtung (53) des Supports (11) orientiert sind; sowie
- einer solchen Anordnung von benachbarten Supports (11), dass die auf den Supports (11) angeordneten Federn, Stossdämpfer oder Magnete (15) miteinander zwecks Übertragung von Impulsen miteinander zusammenwirken können,
**dadurch gekennzeichnet,**
**dass** ein oder zwei Supports (11) jeweils auf einer eigenen, unabhängigen Achse (45) drehbar angeordnet sind.

2. Vorrichtung nach Anspruch 1, **dadurch gekennzeichnet, dass** zur Bildung eines Impulsübertragungselements jeweils zwei Supports (11) in Abstand voneinander auf einer gemeinsamen Achse (45) drehfest angeordnet sind.

3. Vorrichtung nach Anspruch 1 oder 2, **dadurch gekennzeichnet, dass** eine Mehrzahl solcher Impulsübertragungselemente vorgesehen sind, welche koaxial in Abstand voneinander entlang einer gemeinsamen Drehachse derart angeordnet sind, dass die Federn, Stossdämpfer oder Magnete eines Elements mindestens mit denjenigen eines benachbarten Elements zusammenwirken können.

4. Vorrichtung nach einem der Ansprüche 1 bis 3, **dadurch gekennzeichnet, dass** die Achse des Supports (11) oder des Elementes (12) jeweils an einem stationären Rahmen (49,50) drehbar angeordnet, und die Freilaufmittel (19) mit dem Rahmen (49,50) fest verbunden sind, sodass der Support (11) oder das Element (12) in nur einer Drehrichtung drehbar ist.

5. Vorrichtung nach einem der Ansprüche 1 bis 4, **dadurch gekennzeichnet, dass** als Support (11) mindestens ein Ring oder eine Scheibe vorgesehen ist und eine Mehrzahl von solchen Supports (11a,11b,11c, etc.) auf einer gemeinsamen Drehachse (15) und in Abstand voneinander als Stapel oder Aneinanderreihung angeordnet ist, sodass ein von einem externen Impulsgeber auf den ersten Support (11₁) des Stapels übertragener Startimpuls auf den letzten Support (11ₙ) des Stapels übertragen wird.

6. Vorrichtung nach einem der Ansprüche 1 bis 5, **dadurch gekennzeichnet, dass** die Supports (11) mittels mehrerer aussen an der Peripherie anliegenden Lagern (17) frei drehbar gelagert sind und dass an der Ringinnenseite eine Verzahnung (27) vorgesehen ist, in welche ein durch ein Freilauflager (19) gehaltenes Zahnrad (23) eingreift.

7. Vorrichtung nach einem der Ansprüche 1 bis 6, **dadurch gekennzeichnet, dass** die gemeinsame Drehachse der Supports einer Geraden (15) oder einer gekrümmten Bahn, vorzugsweise einer Kreisbahn (49), entspricht.

8. Vorrichtung nach einem der Ansprüche 1 bis 7, **dadurch gekennzeichnet, dass** als Support (11) für die Federmittel (15) eine Kreisscheibe, Ring, Teilring oder dergleichen vorgesehen ist und eine Mehrzahl solcher Scheiben in einer gemeinsamen Ebene und in Abstand voneinander mittels einem oder mehreren entsprechenden Lagern in nur einer Drehrichtung (53) drehbar angeordnet ist, sodass ein von einem externen Impulsgeber auf die erste Scheibe übertragener Startdrehimpuls bis auf die letzte Scheibe der Scheibenanordnung übertragen wird.

9. Vorrichtung nach einem der Ansprüche 1 bis 8, **dadurch gekennzeichnet, dass** auf einer oder mehreren Achsen (45) ein oder mehrere erste Zahnräder (67) drehfest angeordnet sind, dass in Abstand zur Drehachse (52) der Achsen (45) mindestens eine zweite Achse (71) mit darauf angeordneten zweiten Zahnrädern (69) mit Backstops (51) vorgesehen ist, welche zweiten Zahnrädern (69) mittels einer Antriebskette, Riemen, Zahnriemen, oder dergleichen oder direkt in Eingriff mit den ersten Zahnrädern (67) gebracht werden können.

10. Vorrichtung nach einem der Ansprüche 1 bis 9, **dadurch gekennzeichnet, dass** Mittel vorgesehen sind, um mindestens ein Element in einer bestimmten Drehstellung zu blockieren oder zu sperren.

11. Vorrichtung nach Anspruch 10, **dadurch gekennzeichnet, dass** die Sperr- oder Blockiermittel durch einen Riegel, Zahnrad, Kupplung oder dergleichen gebildet sind, und mit mindestens einem Element, vorzugsweise dem zweiten oder dem dritten oder dem vierten usw. Element einer Vorrichtung, vorzugsweise formschlüssig zusammenwirken können.

12. Vorrichtung nach Anspruch 11, **dadurch gekennzeichnet, dass** jeder Support (11) mit wenigstens einer Feder (15),vorzugsweise zwei in Abstand voneinander angeordneten Federn (15), bestückt ist.

13. Vorrichtung nach einem der Ansprüche 1 bis 12, **dadurch gekennzeichnet, dass** die Lagermittel Kugellager, Freilauflager, Gleitlager, Luftlager oder Kombinationen zwischen Freilauf- und Kugellager oder dergleichen sind.

14. Vorrichtung nach einem der Ansprüche 1 bis 13, **dadurch gekennzeichnet, dass** an den Supports, Ritzel, Zahnräder, Backstops oder Achsen zusätzliche Masseteile, z.B. Schwungräder, zur Erhöhung der durch die Vorrichtung speicherbaren Impulsenergie angeordnet sind.

15. Vorrichtung nach einem der Ansprüche 1 bis 14, **dadurch gekennzeichnet, dass** eine Einrichtung vorgesehen ist, um die maximale Kompression und/ oder Entspannung der Feder einzustellen.

16. Vorrichtung nach Anspruch 15, **dadurch gekennzeichnet, dass** die Einstelleinrichtung ein an der Feder angeordneter Rahmen oder Gewindestift mit Mutter ist, um die maximale Kompression und/ oder Entspannung der Feder zu begrenzen.

17. Vorrichtung nach einem der Ansprüche 1 bis 16, **dadurch gekennzeichnet, dass** die Position und Form der Magnete auf den einzelnen Supports so gewählt ist, dass sich eine Restspannung zwischen den auf benachbarten Suppports angeordneten Magneten einstellt, die immer >0 ist.

18. Vorrichtung nach einem der Ansprüche 1 bis 16, **dadurch gekennzeichnet, dass** die Position und Form oder Beschaffenheit der Federn oder Stossdämpfer auf den einzelnen Supports so gewählt ist, dass sich eine Restspannung zwischen den auf benachbarten Supports angeordneten Federn oder Stossdämpfern einstellt, die immer >0 ist.

19. Vorrichtung nach einem der Ansprüche 1 bis 18, **dadurch gekennzeichnet, dass** die mit miteinander zusammenwirkenden Zähnräder, Ritzel oder dergleichen so angeordnet sind, dass die Bewegungsenergie aus den einzelnen Elementen nach aussen geführt werden kann und die Ritzel oder Zahnräder mit oder ohne Schwungräder nachlaufen können.

20. Vorrichtung nach Anspruch 19, **dadurch gekennzeichnet, dass** an den inneren ersten Zahnrädern zusätzliche Backstops vorgesehen sind.

21. Vorrichtung nach einem der Ansprüche 1 bis 20, **dadurch gekennzeichnet, dass** auf einer oder mehreren Achsen (45) ein oder mehrere erste Zahnräder (67) mit Backstops angeordnet sind, dass in Abstand zur Drehachse (52) der Achsen (45) mindestens eine zweite Achse (71) mit darauf drehfest angeordneten zweiten Zahnrädern (69) oder mit darauf angeordneten zweiten Zahnrädern (69) mit Backstops (51) vorgesehen ist, welche zweiten Zahnräder (69) mittels einer Antriebskette, Riemen, Zahnriemen oder dergleichen oder direkt in Eingriff mit den ersten Zahnrädern (67) gebracht werden können.

22. Vorrichtung nach einem der Ansprüche 1 bis 21, **dadurch gekennzeichnet, dass** eine Steuerung vorgesehen ist, um ein unterschiedliches dynamisches Impulsverhalten zu erreichen, indem nur aus jedem zweiten, oder nur aus jedem dritten, oder nur aus jedem vierten usw. Element die Bewegungsenergie nach aussen geführt wird.

## Claims

1. A device for force transmission by means of mechanical interaction, having
- a plurality of supports (11) for receiving or disposing one or more springs, shock absorbers, or magnets,
- at least one axle, on which the supports are rotatably disposed by means of bearing means,
- one or more freewheel means (47), in particular freewheel bearings, which act between the individual supports (11) and the at least one axle, so that the supports (11) that carry the spring, shock absorber or magnets (15) are rotatable in only one direction of motion (53) either about an axis of rotation (45),
- springs, shock absorbers or magnets (15) disposed on the supports, which are each oriented in the direction of motion (53) of the support (11); and
- an arrangement of adjacent supports (11) such that the springs, shock absorbers or magnets disposed on the supports (11) can cooperate with one another for the sake of transmitting pulses to one another,
**characterized in that**
one or two supports (11) are each rotatably disposed on their own independent axle (45).

2. The device according to claim 1, **characterized in that** for forming a pulse transmitting element, two supports (11) each, spaced apart from one another, are disposed on a common axle (45) in a manner fixed against relative rotation.

3. The device according to claim 1 or 2, **characterized in that** a plurality of such pulse transmitting elements are provided, which are disposed coaxially and spaced apart from one another along a common axis of rotation such that the springs, shock absorbers or magnets of one element can cooperate at least with those of an adjacent element.

4. The device according to one of claims 1 to 3, **characterized in that** the axle of the support (11) or of the element (12), each rotatably disposed on a stationary frame (49, 50), and the freewheel means (19) are solidly joined to the frame (49, 50), so that the support (11) or the element (12) is rotatable in only one direction of rotation.

5. The device according to one of claims 1 to 4, **characterized in that** as the support (11), at least one ring or disk is provided, and a plurality of such supports (11 a, 11b, 11 c, etc.) is disposed on a common axis of rotation (15) and spaced apart from one another in the form of a stack or a row with one another, so that a starting pulse, transmitted from an external pulse transducer to the first support (11₁) of the stack is transmitted to the last support (11ₙ) of the stack.

6. The device according to one of claims 1 to 5, **characterized in that** the supports (11) are freely rotatably supported by means of a plurality of bearings (17) resting outside on the periphery; and that on the inside of the ring a toothing (27) is provided, with which a gear wheel (23), held by a freewheel bearing (19), meshes.

7. The device according to one of claims 1 to 6, **characterized in that** the common axis of rotation of the supports corresponds to a straight line (15) or a curved path, preferably a circular path (49).

8. The device according to on of claims 1 to 7, **characterized in that** as the support (11) for the spring means (15), a circular disk, ring, split ring, or the like is provided, and a plurality of such disks is disposed rotatably in only one direction of rotation (53) in a common plane, spaced apart from one another by means of one or more corresponding bearings, so that a starting rotation pulse transmitted from an external pulse transducer to the first disk is transmitted onward as far as the last disk in the disk arrangement.

9. The device according to one of claims 1 to 8, **characterized in that** one or more first gear wheels (67) are disposed on one or more axles (45) in a manner fixed against relative rotation; that spaced from the axis of rotation (52) of the axles (45), at least one second axle (71), with second gear wheels (69) disposed on it with backstops (51), is provided, which second gear wheels (69) can be brought into engagement with the first gear wheels (67) directly, or by means of a drive chain, belt, toothed belt, or the like.

10. The device according to one of claims 1 to 9, **characterized in that** means are provided for blocking or locking at least one element in a defined rotary position.

11. The device according to claim 10, **characterized in that** the locking or blocking means are formed by a locking bar, gear wheel, clutch or the like and can cooperate, preferably by positive engagement, with at least one element, preferably the second or third or fourth element, and so forth, of a device.

12. The device according to one of claims 1 to 11, **characterized in that** each support (11) is equipped with at least one spring (15), and preferably with two springs (15) spaced apart from one another.

13. The device according to one of claims 1 to 12, **characterized in that** the bearing means are ball bearings, freewheel bearings, slide bearings, air bearings, or combinations of freewheel bearings and ball bearings.

14. The device according to one of claims 1 to 13, **characterized in that** additional inertial parts, such as flywheels, are disposed on the supports, pinions, gear wheels, backstops or axles, for increasing the pulse energy that is capable of being stored by the device.

15. The device according to one of claims 1 to 14, **characterized in that** a mechanism is provided for adjusting the maximum compression and/or relief of the spring.

16. The device according to claim 15, **characterized in that** the adjusting mechanism is a frame disposed on the spring, or a threaded pin with a nut, for limiting the maximum compression and/or relief of the spring.

17. The device according to one of claims 1 to 16, **characterized in that** the position and shape of the magnets on the individual supports is selected such that a residual tension which is always > 0 is established between the magnets disposed an adjacent supports.

18. The device according to one of claims 1 to 16, **characterized in that** the position and shape or nature of the springs or shock absorbers on the individual supports is selected such that a residual tension which is always > 0 is established between the springs or shock absorbers disposed on the adjacent supports.

19. The device according to one of claims 1 to 18, **characterized in that** the gear wheels, pinions or the like cooperating with one another are disposed such that the energy of motion from the individual elements can be carried to the outside, and the pinions or gear wheels can continue running with or without flywheels.

20. The device according to claim 19 **characterized in that** additional backstops are provided an the inner, first gear wheels.

21. The device according to one of claims 1 to 20, **characterized in that** one or more first gear wheels (67) with backstops are disposed on one or more axles (45); that spaced apart from the axis of rotation (52) of the axles (45), at least one second axle (71) with second gear wheels (69), disposed thereon in a manner fixed against relative rotation, or second gear wheels (69) with backstops (51), disposed thereon, is provided, which second gear wheels (69) can be made to mesh with the first gear wheels (67) directly, or by means of a drive chain, belt, toothed belt, or the like.

22. The device according to one of claims 1 to 21, **characterized in that** a controller is provided, for attaining a variable dynamic pulse behavior, by providing that the energy of motion is carried to the outside from only every other or every third or every fourth element, and so forth.

## Revendications

1. Dispositif de transmission de force au moyen d'une interaction mécanique avec
- une multitude de supports (11) pour recevoir ou placer un ou plusieurs ressorts, amortisseurs ou aimants,
- au moins un axe sur lequel les supports sont placés rotatifs au moyen de moyens de paliers,
- un ou plusieurs moyens de roue libre (47), en particulier de paliers de roue libre, qui agissent entre les différents supports (11) et l'axe qui existe au moins si bien que les supports (11) qui portent les ressorts, amortisseurs ou aimants (15) ne sont rotatifs autour d'un axe de rotation (45) que seulement dans un sens de déplacement (53),
- des ressorts, amortisseurs ou aimants (15) qui sont orientés respectivement dans le sens de déplacement (53) du support (11 ) et qui sont placés sur les supports (11) ainsi
- qu'un dispositif de supports voisins (11) tel que les ressorts, amortisseurs ou aimants (15) placés sur les supports (11) peuvent coopérer l'un avec l'autre pour transmettre des impulsions,
**caractérisé en ce**
**qu'**un ou deux supports (11) sont placés rotatifs chacun respectivement sur un axe propre indépendant (45).

2. Dispositif selon la revendication 1, **caractérisé en ce que** respectivement deux supports (11) sont placés espacés l'un de l'autre sur un axe commun (45) en étant résistants à la rotation pour former un élément de transmission d'impulsions.

3. Dispositif selon la revendication 1 ou 2, **caractérisé en ce qu'**il est prévu une multitude d'éléments de transmission d'impulsion de ce type qui sont placés de manière coaxiale en étant espacés l'un de l'autre le long d'un axe de rotation commun de telle manière que les ressorts, amortisseurs ou aimants d'un élément peuvent coopérer au moins avec ceux d'un élément voisin.

4. Dispositif selon l'une des revendications 1 à 3, **caractérisé en ce que** l'axe du support (11) ou de l'élément (12) est placé rotatif respectivement sur un cadre fixe (49, 50) et les moyens de roue libre (19) sont reliés de manière fixe au cadre (49, 50) si bien que le support (11) ou l'élément (12) n'est rotatif que dans un sens de rotation.

5. Dispositif selon l'une des revendications 1 à 4, **caractérisé en ce qu'**il est prévu au moins un anneau ou un disque comme support (11) et qu'il est placé une multitude de tels supports (11a, 11b, 11c, etc.) sur un axe de rotation commun (15) et espacés l'un de l'autre comme pile ou rangée si bien qu'une impulsion de départ transmise par un générateur d'impulsions externe au premier support (11₁) de la pile est transmise au dernier support (11ₙ) de la pile.

6. Dispositif selon l'une des revendications 1 à 5, **caractérisé en ce que** les supports (11) sont positionnés librement rotatifs au moyen de plusieurs paliers (17) reposant à l'extérieur sur la périphérie et qu'il est prévu sur le côté intérieur de l'anneau un endentement (27) dans lequel s'engrène une roue dentée (23) maintenue par un palier de roue libre (19).

7. Dispositif selon l'une des revendications 1 à 6, **caractérisé en ce que** l'axe de rotation commun des supports correspond à une droite (15) ou à une trajectoire courbée, de préférence à une trajectoire circulaire (49).

8. Dispositif selon l'une des revendications 1 à 7, **caractérisé en ce qu'**il est prévu un disque circulaire, un anneau, un anneau partiel ou équivalent comme support (11) pour les moyens à ressort (15) et qu'il est placé une multitude de tels disques dans un plan commun et espacés l'un de l'autre au moyen d'un ou de plusieurs paliers correspondants en étant rotatifs dans seulement un sens de rotation (53) si bien qu'une impulsion de rotation de départ transmise par un générateur d'impulsions externe au premier disque est transmise jusqu'au dernier disque de l'arrangement de disques.

9. Dispositif selon l'une des revendications 1 à 8, **caractérisé en ce qu'**une ou plusieurs premières roues dentées (67) sont placées résistantes à la rotation sur un ou plusieurs axes (45), qu'il est prévu au moins un second axe (71) avec des secondes roues dentées (69) placées dessus avec des butées arrières (51), second axe qui est espacé de l'axe de rotation (52) des axes (45), lesquelles secondes roues dentées (69) peuvent être mises en prise avec les premières roues dentées (67) au moyen d'une chaîne d'entraînement, d'une courroie, d'une courroie dentée ou équivalent ou de manière directe.

10. Dispositif selon l'une des revendications 1 à 9, **caractérisé en ce qu'**il est prévu des moyens pour bloquer ou gripper au moins un élément dans une position de rotation définie.

11. Dispositif selon la revendication 10, **caractérisé en ce que** les moyens de grippage ou de blocage sont formés par un verrou, une roue dentée, un embrayage ou équivalent et qu'ils peuvent coopérer, de préférence de manière crabotée, avec au moins un élément, de préférence avec le second ou le troisième ou le quatrième élément etc. d'un dispositif.

12. Dispositif selon la revendication 11, **caractérisé en ce que** chaque support (11) est équipé d'au moins un ressort (15), de préférence de deux ressorts (15) placés espacés l'un de l'autre.

13. Dispositif selon l'une des revendications 1 à 12, **caractérisé en ce que** les moyens de palier sont des roulements à billes, des paliers de roue libre, des paliers à glissement, des paliers d'air ou des combinaisons entre des paliers de roue libre et des roulements à billes ou équivalent.

14. Dispositif selon l'une des revendications 1 à 13, **caractérisé en ce que** des pièces de masse supplémentaires, par exemple des roues volantes, sont placées sur les supports, pignons, roues dentées, butées arrières ou axes pour augmenter l'énergie d'impulsions qui peut être stockée par le dispositif.

15. Dispositif selon l'une des revendications 1 à 14, **caractérisé en ce qu'**il est prévu un dispositif pour régler la compression et/ou la détente maximale du ressort.

16. Dispositif selon la revendication 15, **caractérisé en ce que** le dispositif de réglage est un cadre placé sur le ressort ou une tige filetée avec un écrou pour limiter la compression et/ou la détente maximale du ressort.

17. Dispositif selon l'une des revendications 1 à 16, **caractérisé en ce que** la position et la forme des aimants sur les différents supports est sélectionnée telle qu'il se règle une tension résiduelle entre les aimants placés sur les supports voisins qui est toujours supérieure à zéro.

18. Dispositif selon l'une des revendications 1 à 16, **caractérisé en ce que** la position et la forme ou la constitution des ressorts ou amortisseurs sur les différents supports est sélectionnée telle qu'il se règle une tension résiduelle entre les ressorts ou amortisseurs placés sur les supports voisins qui est toujours supérieure à zéro.

19. Dispositif selon l'une des revendications 1 à 18, **caractérisé en ce que** les roues dentées, pignons ou équivalent qui coopèrent l'un avec l'autre sont placés de telle manière que l'énergie cinétique des différents éléments peut être guidée vers l'extérieur et que les pignons ou roues dentées peuvent marcher sur leur erre avec ou sans roues volantes.

20. Dispositif selon la revendication 19, **caractérisé en ce que** des butées arrières supplémentaires sont prévues sur les premières roues dentées intérieures.

21. Dispositif selon l'une des revendications 1 à 20, **caractérisé en ce qu'**une ou plusieurs premières roues dentées (67) avec des butées arrières sont placées sur un ou plusieurs axes (45), qu'au moins un second axe (71) avec des secondes roues dentées (69) placées dessus résistantes à la rotation ou avec des secondes roues dentées (69) placées dessus avec des butées arrières (51) est prévu espacé de l'axe de rotation (52) des axes (45), lesquelles secondes roues dentées (69) peuvent être mises en prise avec les premières roues dentées (67) au moyen d'une chaîne d'entraînement, d'une courroie, d'une courroie dentée ou équivalent ou de manière directe.

22. Dispositif selon l'une des revendications 1 à 21, **caractérisé en ce qu'**il est prévu une commande pour obtenir un comportement d'impulsions dynamique différent en ne guidant l'énergie cinétique vers l'extérieur que de chaque seconde ou que de chaque troisième ou que de chaque quatrième élément etc.
